# EUROPÄISCHE PATENTSCHRIFT

(11) **EP 1 562 019 B1**
(45) Veröffentlichungstag und Bekanntmachung des Hinweises auf die Patenterteilung: **31.01.2007**
(21) Anmeldenummer: 04029765.7
(22) Anmeldetag: 16.12.2004
(51) Int. Cl.: F41H 7/02, B60K 1/00

(54) **Gepanzertes Kampffahrzeug mit einer Brennstoffzelle**
Armoured vehicle with a fuel cell
Véhicule blindé comportant une pile à combustible

(30) Priorität: 07.02.2004 DE 102004006152
(43) Veröffentlichungstag der Anmeldung: 10.08.2005
(73) Patentinhaber: Rheinmetall Landsysteme GmbH, 24107 Kiel (DE)
(72) Erfinder: Jöhnk, Manfred, 24159 Kiel (DE); Kühl, Klaus, 24159 Kiel (DE)
(74) Vertreter: Dietrich, Barbara

(56) Entgegenhaltungen:
- EP-A- 1 083 399
- WO-A-98/19875
- DE-A- 4 427 322
- DE-A- 19 537 945
- DE-C- 19 756 683
- BARTH ET AL.: "Porsche Sondertypen und-konstruktionen" 1985, MOTORBUCH VERLAG , STUTTGART , XP002327435 "Leopard (Typ 100)" * Seiten 134,135 *

## Beschreibung

Die Erfindung betrifft ein militärisches Fahrzeug mit einem kombinierten Antrieb aus Elektromotoren, fallweise Dieselmotor und Generator und unter Einsatz von einer Brennstoffzelle.

Es ist bekannt, dass die Beweglichkeit insbesondere eines militärischen Fahrzeugs, beispielsweise eines Kampffahrzeugs zur Erkundung und weitere Zwecke, einen hohen Stellenwert besitzt. Ein solches Fahrzeug muss auch an versteckten und unzugänglichen Orten einsetzbar sein und den Überraschungseffekt bei seinem Einsatz nutzen können. Besonders die Tarnung besitzt dabei einen hohen Stellenwert. Diese Tarnung kann die Sichtbarkeit in mehreren Spektren, Geräusch und weitere Aspekte betreffen. Bekannte Ausführungen sehen zum Beispiel vor, ein Fahrzeug möglichst klein zu machen, um unter anderem eine hohe Tarnungsfähigkeit zu erreichen. Diese Bemühung hat eine Grenze, wenn das Fahrzeug bemannt sein soll, da ein Bediener einen gewissen Platzbedarf in einem Fahrzeug benötigt entsprechend seiner Körpergröße und seiner vorgesehenen Aktivität im Fahrzeug und ein unbemanntes Fahrzeug keine generell einsetzbare Ausweglösung darstellt. Deshalb hat ein bemanntes Fahrzeug immer ein Mindestvolumen und eine geometrische Größe.

Bezüglich der Tarnung der Sichtbarkeit in optischen und verwandten anderen Spektren sind ebenfalls Grenzen gesetzt. Hierzu gibt es die Beispiele des Tarnkappenbombers und der Tarnkappenfregatte, welche eine spezielle geometrische Formgebung der Außenhülle einhalten, mit der ein sehr geringes Radarecho erzeugt wird.

Eine Infrarottarnung als weiteres Beispiel muss so angelegt sein, dass ein Fahrzeug als Wärmekörper keinen oder nur einen geringen Unterschied zur umgebenden Wärmestrahlung zeigt. Dies versucht man durch konstruktive Maßnahmen zu erreichen oder durch ein gezieltes Aufheizen/ Abkühlen von interessierenden Oberflächen mittels zum Beispiel Heiz- und Kühlelementen an dieser Oberfläche. Diese Maßnahme mittels Heizen/ Kühlen erfordert Energie, speziell oder vorteilhaft elektrische Energie für das Aufheizen oder Abkühlen gewisser Flächen am Fahrzeug.

Auch eine günstige Anordnung der Komponenten eines Fahrzeugs im Fahrzeug kann eine effektvolle Wirkung bezüglich Tarnung haben, wenn zum Beispiel bei Infrarottarnung wärmebelastete Abgase, welche als Auspuffgase eines Verbrennungsmotors oder als Kühlabluft eines zu kühlenden Prozesses anfallen, vor Abgabe an die Umgebungsluft mit Frischluft vermischt und diese Abgase dann unten und hinten am Fahrzeug an die Umgebung entlassen werden und auch generell Hotspots außen am Fahrzeug mit einem hohen Temperaturgradienten zur Umgebung ganz vermieden werden. Dabei gibt es naturgemäß Komponenten, welche nur schwer an eine beliebige Stelle versteckt im Fahrzeug eingebaut werden können. Hier hat jedoch der Einsatz von elektrischer Energie, auch beim Antrieb, die Bemühung um ein optimal strukturiertes Fahrzeug einen großen Schritt vorwärts gebracht. Sobald die mehr oder weniger mechanisch starre Kopplung zwischen Radantrieb, Getriebe und Motor mittels Einsatz von elektrischer Energie und Motor-Generator, Kabelverbindung und elektrischem Radantrieb, also einem elektrischen Getriebe, überwunden war, ist eine verteilte Anordnung der Antriebskomponenten im Fahrzeug ermöglicht worden.

Insgesamt ist der Einsatz von elektrischer Energie in einem Fahrzeug für viele Zwecke sehr vorteilhaft vorgenommen worden, da die mechanischen Kopplungen zwischen Energieerzeugung in einem Motor und Energieabnehmer, zum Beispiel einer Pumpe, entfallen konnten. Mittels Einsatz von immer besseren Magnetwerkstoffen und Konstruktionen ist der Wirkungsgrad und die geringe Baugröße der elektrischen Maschinen zudem bis heute enorm verbessert worden.

Auch der Einsatz einer Brennstoffzelle zur Erzeugung von elektrischer Energie auf direktem Weg über die umgekehrte Elektrolyse bzw. kalte Verbrennung eines Gases wie Wasserstoff mit Sauerstoff zu elektrischer Energie und Wasser ist heute bereits im fortgeschrittenen Versuchsstadium bei Fahrzeugen eingesetzt (siehe zum Beispiel Der Tagesspiegel Nr. 17842, 3.08.2002, Seite M2, Toyotas für eine bessere Umwelt u.a.).

In der DE 195 37 945 C2 wird der dieselelektrische Antrieb in einem Kettenfahrzeug so angeordnet, dass der Energieerzeuger bestehend aus Verbrennungsmotor und elektrischem Generator seitlich hinten angeordnet wird und vier elektrische Motore die Ketten antreiben und ein Durchgang für die Besatzung nach hinten zu einem Heckausstieg erhalten bleibt.

Die EP 1083399 A offenbart ein gepanzertes Fahrzeug mit einer Versorgung von elektrischen Antrieben und weiteren elektrischen Verbrauchern durch eine Brennstoffzelle.

In der DE 197 56 683 C1 ist die Energieerzeugereinheit bestehend aus Verbrennungsmotor und elektrischem Generator mindestens zweifach vorgesehen und links und rechts am Fahrzeug im Bereich der Kettenschulter eines Kettenfahrzeugs eingebaut.

In der DE 100 06 344 C2 wird ein Nutzfahrzeug mit Brennstoffzelle angegeben, bei dem die Druckluftversorgung für die Brennstoffzelle und alle sonstigen Luftverbraucher, zum Beispiel eine Bremse, sinnvoll aus einer Drucklufterzeugungsanlage versorgt werden.

In der EP 1 284 346 A2 wird ein Fahrzeug mit Verbrennungsmotor und Brennstoffzelle angegeben, wobei die Brennstoffzelle direkt am Motor platziert wird und das Motorgetriebe entsprechend vom Motor weg an der Hinterachse angebaut wird, damit die Brennstoffzelle direkt am Motor mit der erforderlichen Aufwärmung mittels Motorabwärme versorgt werden kann.

In der WO 01/34424A1 wird ein Fahrzeug mit einer Brennstoffzelle zur elektrischen Energieerzeugung angegeben, bei dem mittels Energiezwischenspeicher Energie für den Batteriestart und für erhöhten Energiebedarf vorgehalten wird und dieser Speicher von der Brennstoffzelle und mittels Bremsenergie aufgeladen wird.

Aufgabe der Erfindung ist es, Verbesserungen an einem militärischen Panzerfahrzeug bei der Konfiguration und Missionsfähigkeit einzubringen.

Gelöst wird die Aufgabe durch die Merkmale des Patentanspruchs 1. Weitere vorteilhafte Ausführungen enthalten die Unteransprüche.

Der Erfindung liegt die Idee zugrunde, für die elektrische Energieerzeugung einen lärmerzeugenden mechanischen Verbrennungsmotor durch eine geräuschlosere Brennstoffzelle (BS) zu ersetzen. Dies hat unter anderem auch einen sehr gewichtigen Sicherheitsvorteil. Minen mit Fahrzeugkenndaten können derartige gepanzerte Fahrzeuge schlecht orten. So wird in ein gepanzertes Kettenfahrzeug eine Brennstoffzellenanlage einschließlich Kraftstofftanks eingebaut, wobei die Gefährdung der Besatzung gering gehalten und die Tarnung für das Fahrzeug erhöht wird, sowie weitere Maßnahmen der optimalen Gestaltung des Fahrzeugs eingebracht werden. Dazu werden die Brennstoffzelle (BS) und Komponenten aufgeteilt im Fahrzeugheck eingebaut, wobei auch zwei gleichartige BS-Anlagen links und rechts hinten im Fahrzeug eingebaut sein können. Auch die Brennstofftanks für den benötigten Wasserstoff oder einen flüssigen Brennstoff zur Herstellung von Brenngas sind ganz hinten am Heck untergebracht. Die Komponenten der BS werden dabei unten und hinten im Fahrzeug so eingebaut, dass ein Durchgang für die Besatzung nach hinten zu einem Einstieg erhalten bleibt.
Der einzige Geräuscherzeuger ist dann bis auf kleinere Verursacher eine Luftanlage zur Bereitstellung von Brennluft für die BS und die Kühl- bzw. Heizanlage mit einem Luftwärmetauscher für verschiedene Zwecke bezüglich der BS und weiterer Funktionen im Fahrzeug. Generell wird sonst weitestgehend alles mit elektrischem Strom betrieben, was zur Missionserfüllung des Fahrzeugs gehört.

Fallweise werden Tanks für flüssigen Wasserstoff oder einen anderen flüssigen Brennstoff, der in einem Reformator zu benötigtem Wasserstoff und/oder Sauerstoff aufbereitet wird, außen und hinten im Fahrzeug untergebracht. Durch entsprechende Abschottung zum Mannschaftsraum wird erreicht, dass ein Explodieren eines Tanks keine letale Wirkung für die Fahrzeugbesatzung hat. Es gibt ausschließlich elektrische Komponenten für Antriebe und weitere Funktionen im Fahrzeug. Dies hat den Vorteil, bei entsprechender Auslegung der Komponente praktisch einen geräuschlosen Betrieb zu erlauben. Die Kühlluftanlage als Geräuscherzeuger, die bei einem Betrieb von wesentlichen Teilen der BS bei einer erforderlichen Temperatur von zum Beispiel rund 80 Grad Celsius notwendig ist, wird ebenfalls mit elektrischen Lüftern und Komponenten ausgestattet. Die Bewaffnung erfolgt fallweise mit einer chemisch/ elektrischen der einer rein elektrischen Kanone als Abstandswaffe. Diese Bewaffnung, die im Versuchsstadium bekanntermaßen betrieben wird, benötigt elektrische Energie fallweise in Form eines kurzzeitigen hohen Stromimpulses, sei es zur Zündung einer chemischen brisanten Treibladung oder zur Erzeugung eines elektromagnetischen Vortriebs für ein Geschoss. Die benötigte Energie erhält die Waffe ebenfalls aus der vorgeschlagenen BS-Anlage, wobei spezielle Maßnahmen zur Speicherung und Kurzzeitentladung für eine Spitzenbelastung entsprechend der Waffe mittels speziellen hochspeichernden Kondensatoren (zum Beispiel Ultra Caps) oder einem elektrisch betriebenen Schwungmassenspeicher eingerichtet werden können.

Ein Ausführungsbeispiel der Erfindung ist in der Zeichnung schematisch dargestellt und wird im folgenden näher beschrieben. Es zeigen:
- Figur 1:: Draufsicht Fahrzeug mit Anordnung der Komponenten
- Figur 2:: Rückansicht Fahrzeug
- Figur 3:: Seitenansicht

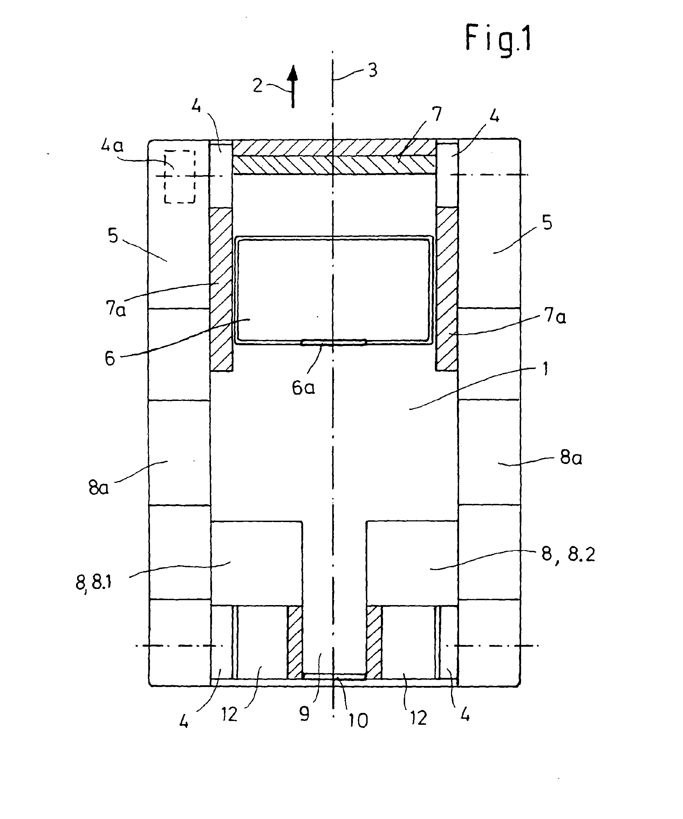

Figur 1 zeigt ein Fahrzeug 1, hier ein Panzerfahrzeug, mit einer Fahrtrichtung 2 des Fahrzeugs 1 und einer Mittellinie 3 in Längsrichtung des Fahrzeugs 1. Vorn und hinten sind jeweils zwei Elektroantriebe 4 links und rechts im Fahrzeug 1 eingebaut, welche jeweils Antriebsräder 4a für den Antrieb von Gleisketten 5 antreiben. Ein Mannschaftsraum für die Besatzung des Fahrzeugs 1 ist in einem Kampfraum 6 untergebracht hinter frontseitiger Panzerung 7 und seitlicher Panzerung 7a. Im Heckbereich des Fahrzeugs 1 sind zwei Brennstoffzellenteilanlagen 8.1, 8.2 links und rechts im Fahrzeug 1 eingebaut. Weitere Komponenten 8a der Brennstoffzellenanlage (BS) 8 sind auf der Kettenschultern 5a im Bereich über der Kette 5 untergebracht. Brennstofftanks 12 sind links und rechts im Fahrzeugheck ganz hinten eingebaut. Zwischen den BS 8 im Heck ist ein Durchgang 9 freigehalten und eine Heckluke 10 erlaubt den Einstieg in das Fahrzeug und den Durchgang zum Kampfraum 6.

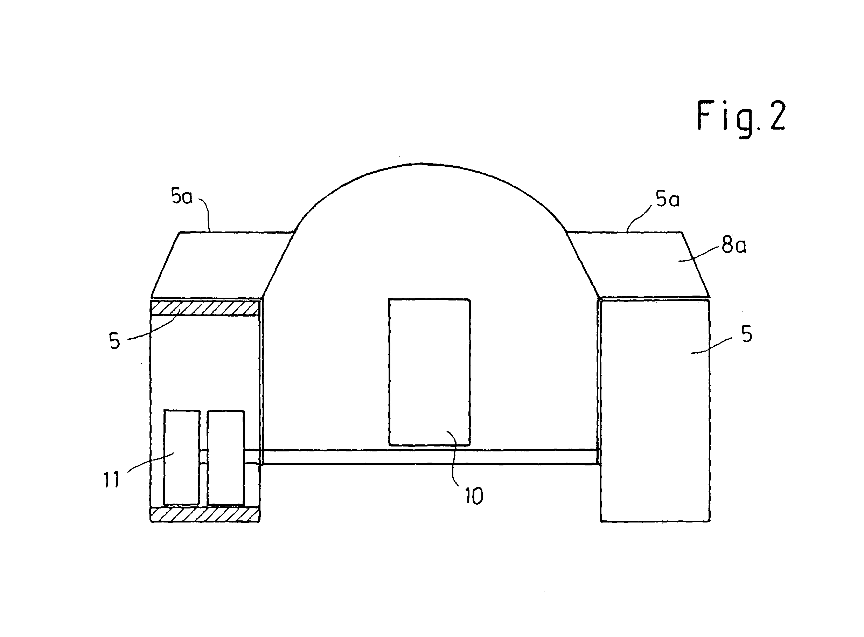

Figur 2 zeigt das Fahrzeug 1 von hinten mit der Heckluke 10 in Heckmitte und den Gleisketten 5 links und rechts vom Gehäuse und Laufrollen 11. In der Kettenschulter 5a sind Komponenten 8a der BS-Anlage 8 eingebaut.

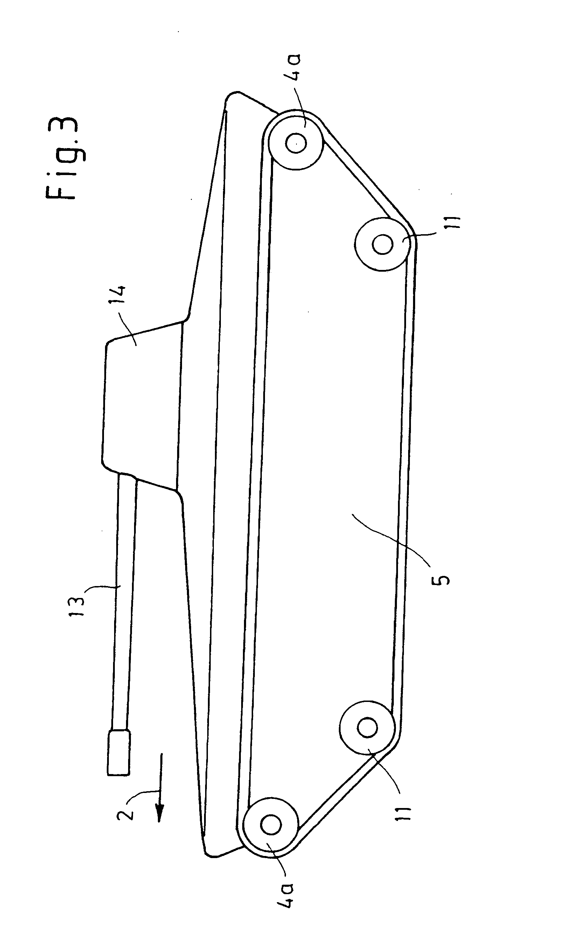

In Figur 3 ist das Fahrzeug in der Seitenansicht mit einer Kanonenwaffe 13 dargestellt. Diese kann auf einer Lafette 14 oder einem Turm eingebaut sein, welcher oben auf dem Fahrzeug 1 angebracht ist.

Die vorgeschlagene Lösung ergibt für die Besatzung einen sicheren Platz im Fahrzeug 1 , für die Unterbringung der Energie- und Antriebsanlage den optimalen Platz im Fahrzeugheck bezüglich dem Tarnpotential nach vorn bzw. schräg nach vorn und mittels des Durchgangs und Zustiegs am Heck einen gesicherten Zugang für die Besatzung. Weitere Zugänge für die Besatzung werden mittels der bekannten Luken 6a auf dem Fahrzeugdach realisiert (nicht näher dargestellt). Durch die Aufteilung der BS-Anlage 8 in mehr als eine Teilanlage 8.1, 8.2 und die fallweise Austauschbarkeit gegen ein Diesel-Generatoraggregat wird die Verfügbarkeit des Fahrzeugs 1 erhöht, da ein Ausfall eines Teils nicht zu einem Fahrzeugausfall führen muss.

Als Komponente 8a wird u.a. ein nicht dargestelltes Brennstoffheizgerät oder ein Hilfsenergieerzeuger, beispielsweise bestehend aus einem (kleinen) Verbrennungsmotor und einem elektrischen Generator, die Heizenergie für die Aufwärmung der Brennstoffzellenanlage 8 auf ihre Betriebstemperatur und weitere elektrische und Heizenergie für weitere vorbereitende Maßnahmen bei und vor dem Betrieb des Fahrzeugs (1) bereitstellt, gesehen. Dieses Heizgerät ist vorzugsweise ebenfalls auf der Kettenschulter 5a eingebaut. Die Brennstoffzellenanlage 8 wird mit Flüssigkeit als Medium geheizt oder gekühlt.
Vorgesehen ist auch, dass eine elektrische Energiespeicheranlage mit Batterien oder Kondensatoren eingebaut wird (nicht dargestellt), welche Energie aus der Brennstoffzellenanlage 8 zwischenspeichern kann vor Abgabe an Stromverbraucher. Alternativ kann eine hochkapazitive elektrische Kondensatorspeicheranlage eingebaut werden, welche Spitzenenergie für spezielle Verbraucher zum Beispiel eine Kanone zwischenspeichern kann nach Bereitstellung aus der Brennstoffzellenanlage 8.

Weitere Vorteile ergeben sich daraus, dass die elektrische Energie zum Heizen oder Kühlen von gewissen Fahrzeugaußenflächen verwendet wird, um eine bessere Tarnung im Infrarotbereich bei Beobachtung aus der Entfernung für das Fahrzeug zu erreichen. Des Weiteren ist Brennstoffzellenanlage oder -teilanlage 8, 8.1, 8.2 mittels geeigneter lösbarer Schnittstellen gegen ein Verbrennungsmotor-Generator-Aggregat zur Stromerzeugung austauschbar. Die Brennstoffzelle 8 wird entweder mit Luftsauerstoff aus zugeführter Luft oder mit einem Sauerstoff abgebenden Medium betrieben, wobei der Brennsauerstoff dann mittels eines speziellen Reformators erzeugt wird. Es werden Antriebsmotore 4 und zugehörige elektrische Schalteinrichtungen verwendet, welche eine Rückspeisung der elektrischen Bremsenergie in Batterien oder zurück in die Brennstoffzelle zur Rückgewinnung von Brenngas erlauben. Ergänzend sind Solarzellen am Fahrzeug 1 in geeigneter Weise angebracht, welche elektrischen Strom aus Sonnenenergie erzeugen und eine Einspeisung als Rückspeisung erlauben. Die Brennstoffzellenanordnung 8 umfasst zur kalten Verbrennung von Sauerstoff und Wasserstoff zu elektrischem Strom und Wasserdampf als Abgas eine Reformatoranlage zur Erzeugung des benötigten Wasserstoffs aus einem geeigneten Brennstoff und eine elektronische Schaltanlage zur gesteuerten Stromabgabe an Verbraucher sowie eine Heizanlage zur Aufwärmung der Brennstoffzelle auf ihre Betriebstemperatur und eine Kühlanlage zur Wegkühlung von nicht benötigter Prozesswärme bei der elektrischen Energieerzeugung.

### Bezugszeichenliste

- 1: Fahrzeug
- 2: Fahrtrichtungspfeil
- 3: Symmetrielinie, Mittellinie
- 4: Elektrischer Antriebsmotor
- 4a: Kettenantriebsrad
- 5: Kettenseite
- 5a: Kettenschulter
- 6: Mannschafts-/ Kampfraum
- 6a: Luke
- 7: Panzerung
- 7a: seitliche Panzerung
- 8, 8.1, 8.2: Brennstoffzellenanlage bzw. -teilanlage BS
- 8a: Komponente Brennstoffzellenanlage
- 9: Mitteldurchgang
- 10: Heckluke
- 11: Laufrolle
- 12: Brennstofftank
- 13: Kanone
- 14: Lafette

## Patentansprüche

1. Gepanzertes Fahrzeug (1) mit einer Versorgung von wenigstens einem elektrischen Antriebsmotor (4) für die Fahrzeugbewegung und einer Versorgung von weiteren elektrischen Verbrauchern des Fahrzeugs (1), wobei die Versorgung des wenigstens einen Antriebsmotors (4) durch wenigstens eine Brennstoffzellenanlage (8) erfolgt, welche aus mehreren Einheiten oder Teileinheiten (8.1, 8.2) besteht und die aufgeteilt links und rechts im Fahrzeug (1) geschützt und entfernt vom Kampfraum (6) im Fahrzeugheck untergebracht ist, wobei die Brennstofftanks (12) im Fahrzeugheck zwischen einem Mittelgang (9) und dem Antriebsmotor (4) eingebaut sind.

2. Gepanzertes Fahrzeug nach Anspruch 1, **dadurch gekennzeichnet, dass** Komponenten (8a) der Brennstoffzellenanlage (8) seitlich über den Ketten (5) auf der Kettenschulter (5a) eingebaut sind.

3. Gepanzertes Fahrzeug nach Anspruch 1 oder 2, **dadurch gekennzeichnet, dass** ein abgeschotteter Kampfraum (6) für Besatzungsmitglieder im vorderen Bereich des Fahrzeugs (1) und geschützt durch Panzerung (7, 7a) eingebaut ist und mindestens eine Luke (6a) den Zugang zum Kampfraum (6) erlaubt.

4. Gepanzertes Fahrzeug nach einem der oben genannten Ansprüche 1 bis 3, **dadurch gekennzeichnet, dass** ein Brennstoffheizgerät oder ein Hilfsenergieerzeuger bestehend aus einem Verbrennungsmotor und einem elektrischen Generator, die Heizenergie für die Aufwärmung der Brennstoffzellenanlage (8) auf ihre Betriebstemperatur und vorbereitende Maßnahmen bei und vor dem Betrieb des Fahrzeugs (1) bereitstellt.

5. Gepanzertes Fahrzeug nach Anspruch 4, **dadurch gekennzeichnet, dass** das Heizgerät auf der Kettenschulter (5a) eingebaut ist.

6. Gepanzertes Fahrzeug nach einem der oben genannten Ansprüche 1 bis 5, **dadurch gekennzeichnet, dass** die Brennstoffzellenanlage (8) des Weiteren elektrische Energie bereitstellt für das Abfeuern und die Versorgung einer elektrochemischen oder elektromagnetischen Kanone (13).

7. Gepanzertes Fahrzeug nach einem der oben genannten Ansprüche 1 bis 6, **dadurch gekennzeichnet, dass** die Brennstoffzellenanlage (8) mit Flüssigkeit als Medium geheizt oder gekühlt wird.

8. Gepanzertes Fahrzeug nach einem der oben genannten Ansprüche 1 bis 7, **dadurch gekennzeichnet, dass** zur Zwischenspeicherung von Energie aus der Brennstoffzellenanlage (8) vor Abgabe an Verbraucher eine elektrische Energiespeicheranlage mit Batterien oder Kondensatoren dient.

9. Gepanzertes Fahrzeug nach Anspruch 8, **dadurch gekennzeichnet, dass** eine hochkapazitive elektrische Kondensatorspeicheranlage eingebaut ist.

10. Gepanzertes Fahrzeug nach einem der oben genannten Ansprüche 1 bis 9, **dadurch gekennzeichnet, dass** eine Brennstoffzellenanlage oder -teilanlage (8, 8.1, 8.2) mittels geeigneter lösbarer Schnittstellen gegen ein Verbrennungsmotor-Generator-Aggregat zur Stromerzeugung austauschbar ist.

11. Gepanzertes Fahrzeug nach Anspruch 1, **dadurch gekennzeichnet, dass** der wenigstens eine Antriebsmotor (4) für die Fahrzeugbewegung zentral über ein Getriebe oder vorn und hinten und/oder jeweils links und rechts im Fahrzeuggehäuse eingebaut ist und Gleisketten (5) links und rechts am Fahrzeuggehäuse mittels Kettenantriebsrädern (4a) antreiben.

12. Gepanzertes Fahrzeug nach einem der Ansprüche 1 bis 11, **dadurch gekennzeichnet, dass** ein Mittelgang (9) zwischen den Einheiten (8.1, 8.2) freigelassen wird, der mittels einer Heckluke (10) von hinten zugänglich ist.

## Claims

1. Armoured vehicle (1) with a supply for at least one electric drive motor (4) for vehicle propulsion and a supply for further electric leads in the vehicle (1), with the supply for the at least one drive motor (4) being provided by at least one fuel cell system (8) that comprises several units or subunits (8.1, 8.2) and is split on the left and right in the vehicle (1) protected and at a distance from the combat area (6) in the rear of the vehicle, with the fuel tanks (12) being fitted in the rear of the vehicle between a central access passage (9) and the drive motor (4).

2. Armoured vehicle according to Claim 1, **characterized in that** components (8a) of the fuel cell system (8) are fitted at the side above the tracks (5) on the track shoulder (5a).

3. Armoured vehicle according to Claim 1 or 2, **characterized in that** a partitioned combat area (6) for the crew members is provided in the front area of the vehicle (1) and is protected by armour (7, 7a), and **in that** at least one hatch (6a) allows access to the combat area (6).

4. Armoured vehicle according to one of the above Claims 1 - 3, **characterized in that** a fuel heater unit or auxiliary energy generator, comprising an internal combustion engine and an electrical generator is provided that produces heat energy for heating the fuel cell system (8) to its operating temperature and allows preparatory measures during and before operation of the vehicle (1).

5. Armoured vehicle according to Claim 4, **characterized in that** the heater unit is mounted on the track shoulder (5a).

6. Armoured vehicle according to one of the above Claims 1 - 5, **characterized in that** the fuel cell system (8) furthermore provides electrical energy for the firing and for supplying an electrochemical or electromagnetic gun (13).

7. Armoured vehicle according to one of the above Claims 1 - 6, **characterized in that** the fuel cell system (8) is heated or cooled using liquid as a medium.

8. Armoured vehicle according to one of the above Claims 1 - 7, **characterized in that** an electrical energy storage system with batteries or capacitors is used for temporary storage of energy from the fuel cell system (8) before being supplied to leads.

9. Armoured vehicle according to Claim 8, **characterized in that** a high-capacitance electrical capacitor storage system is installed.

10. Armoured vehicle according to one of the above Claims 1 - 9, **characterized in that** a fuel cell system or subsystem (8, 8.1, 8.2) can be replaced by an internal combustion engine-generator set for power generation by means of suitable disconnectable interfaces.

11. Armoured vehicle according to Claim 1, **characterized in that** the at least one drive motor (4) for vehicle propulsion is fitted centrally above a transmission unit or at the front and back and/or on the left and right respectively in the vehicle body and drive or drives tracks (5) on the left and right of the vehicle body by means of track drive wheels (4a).

12. Armoured vehicle according to one of Claims 1 - 11, **characterized in that** a central access passage (9) that is accessible from the rear through a rear hatch (10) is left clear between the units (8.1, 8.2).

## Revendications

1. Véhicule blindé (1) doté d'une alimentation pour au moins un moteur électrique d'entraînement (4) qui assure le déplacement du véhicule et d'une alimentation pour d'autres consommateurs électriques du véhicule (1), l'alimentation du ou des moteurs d'entraînement (4) s'effectuant par au moins une installation (8) de cellules à combustible qui est constituée d'une ou plusieurs unités ou parties d'unités (8.1, 8.2) et qui est répartie à gauche et à droite dans le véhicule (1) à l'arrière du véhicule en étant protégée et éloignée de la chambre de combat (6), les réservoirs (12) de combustible étant montés à l'arrière du véhicule entre un passage central (9) et le moteur d'entraînement (4).

2. Véhicule blindé selon la revendication 1, **caractérisé en ce que** des composants (8a) de l'installation (8) de cellules à combustible sont montés latéralement au-dessus des chaînes (5), sur l'épaulement (5a) prévu pour les chenilles.

3. Véhicule blindé selon les revendications 1 ou 2, **caractérisé en ce qu'**une chambre de combat (6) cloisonnée est prévue pour les membres d'équipage dans la partie avant du véhicule (1) et est protégée par un blindage (7, 7a), au moins une écoutille (6a) donnant accès à la chambre de combat (6).

4. Véhicule blindé selon l'une des revendications 1 à 3 qui précèdent, **caractérisé en ce qu'**un appareil de chauffage à combustible ou un générateur auxiliaire d'énergie constitué d'un moteur à combustion interne et d'un générateur électrique délivrent l'énergie de chauffage pour chauffer l'installation (8) de cellules à combustible à sa température de fonctionnement et pour les dispositions de préparation qui accompagnent et précèdent l'utilisation du véhicule (1).

5. Véhicule blindé selon la revendication 4, **caractérisé en ce que** l'appareil de chauffage est monté sur l'épaulement (5a) de chenille.

6. Véhicule blindé selon l'une des revendications 1 à 5 qui précèdent, **caractérisé en ce que** l'installation (8) de cellules à combustible délivre par ailleurs de l'énergie électrique pour le tir et l'alimentation d'un canon électrochimique ou électromagnétique (13).

7. Véhicule blindé selon l'une des revendications 1 à 6 qui précèdent, **caractérisé en ce que** l'installation (8) de cellules à combustible est chauffée ou refroidie par un fluide liquide.

8. Véhicule blindé selon l'une des revendications 1 à 7 qui précèdent, **caractérisé en ce qu'**une installation de stockage d'énergie électrique à batterie ou à condensateurs assure le stockage intermédiaire de l'énergie de l'installation (8) de cellules à combustible avant qu'elle soit délivrée aux consommateurs.

9. Véhicule blindé selon la revendication 8, **caractérisé en ce qu'**il comprend une installation de stockage à condensateurs électriques à haute capacité.

10. Véhicule blindé selon l'une des revendications 1 à 9 qui précèdent, **caractérisé en ce que** des interfaces libérables appropriées permettent de remplacer l'installation de cellules à combustible ou des parties de l'installation de cellules à combustible (8, 8.1, 8.2) par un ensemble constitué d'un moteur à combustion interne et dune génératrice qui crée du courant.

11. Véhicule blindé selon la revendication 1, **caractérisé en ce que** le ou les moteurs d'entraînement (4) qui assurent le déplacement du véhicule sont montés avec une transmission dans le caisson du véhicule, au centre, à l'avant et à l'arrière et/ou à gauche et à droite, et entraînent au moyen de roues (4a) d'entraînement de chenilles les chenilles (5) situées à gauche et à droite du caisson du véhicule.

12. Véhicule blindé selon l'une des revendications 1 à 11, **caractérisé en ce qu'**un passage central (9) est laissé libre entre les unités (8.1, 8.2) et est accessible par l'arrière au moyen d'une écoutille arrière (10).
